# EUROPÄISCHE PATENTSCHRIFT

(11) **EP 2 397 027 B1**
(45) Veröffentlichungstag und Bekanntmachung des Hinweises auf die Patenterteilung: **27.01.2016**
(21) Anmeldenummer: 11159308.3
(22) Anmeldetag: 23.03.2011
(51) Int. Cl.: A01D 43/08

(54) **Landwirtschaftliche Erntemaschine**
Agricultural harvester
Moissonneuse agricole

(30) Priorität: 18.06.2010 DE 102010017459
(43) Veröffentlichungstag der Anmeldung: 21.12.2011
(73) Patentinhaber: CLAAS Selbstfahrende Erntemaschinen GmbH, 33428 Harsewinkel (DE)
(72) Erfinder: Hohlfeld, Markus, 48431, Rheine (DE); Laumeier, Ludger, 33378, Rheda-Wiedenbrück (DE); Lahmann, Dirk, 33790, Halle&Westf. (DE); Gude, Ulrich, 48431, Rheine (DE)

(56) Entgegenhaltungen:
- EP-A1- 1 927 277
- EP-A1- 2 135 499
- EP-A2- 0 157 592
- DE-A1- 3 816 166
- DE-A1- 4 406 892
- DE-A1- 10 054 285
- US-A1- 2004 112 659

## Beschreibung

Die Erfindung betrifft eine selbstfahrende landwirtschaftliche Erntemaschine, mit einer gegenüber einem Maschinenrahmen der Erntemaschine gelagerten Überladeeinrichtung, die sich mittels eines Aktors in deren Höhe verstellen lässt, umfassend zumindest einen Sensor zur Erfassung einer auf die Überladeeinrichtung einwirkenden Schwingungsursache sowie eine Auswert- und Steuereinheit, welche den Aktor abhängig von der erfassten Schwingungsursache betätigt, um Schwingungen der Überladeeinrichtung zu dämpfen.

Derartige Erntemaschinen sind auf dem Markt seit Jahren bekannt. Insbesondere Feldhäcksler weisen zur Ermöglichung des Überladens von Erntegut auf ein neben oder hinter dem Feldhäcksler herfahrendes Transportfahrzeug eine höhenverstellbare Überladeeinrichtung auf. Dazu ist diese - auch als "Auswurfkrümmer" bezeichnete - Überladeeinrichtung zumindest um eine horizontale Achse verschwenkbar gegenüber dem Maschinenrahmen des Feldhäckslers gelagert. Beispielsweise mittels eines Hydraulikzylinders oder eines Elektromotors kann die Überladeeinrichtung so um die horizontale Achse verschwenkt werden, um deren Höhe relativ zum Maschinenrahmen verstellen. Daneben ist die Überladeeinrichtung zumeist um eine vertikale Hochachse drehbar, was je nach Winkelstellung ein seitliches Überladen neben die Erntemaschine oder ein Überladen hinter die Erntemaschine ermöglicht.

Aufgrund einer marktbedingten Tendenz zu immer größeren Arbeitsbreiten weisen Überladeeinrichtungen eine wachsende Länge auf. Die größere Länge ist unter anderem erforderlich, da die Transportfahrzeuge - bei seitlicher Überladung - aufgrund eines breiteren an den Feldhäcksler angebauten Vorsatzgeräts einen größeren Abstand zum Feldhäcksler einhalten müssen, gleichzeitig aber trotz des größeren Abstands ein sicheres Überladen des Ernteguts gewährleistet sein soll.

Bedingt durch die große Länge der Überladeeinrichtung führen bereits geringfügige Nick- oder Wankbewegungen der Erntemaschine (Verdrehung um deren Querachse bzw. um deren Längsmittelachse), die beispielsweise während der Erntefahrt aufgrund von Bodenunebenheiten auftreten, zu verhältnismäßig großen Positionsänderungen des auswurfseitigen Endes der Überladeeinrichtung, da die Überladeeinrichtung aufgrund der Lagerung am Maschinenrahmen zu einer Mitbewegung mit dem Maschinenrahmen gezwungen ist. Der aus der Überladeeinrichtung austretende Erntegutstrahl kann auf diese Weise einen angestrebten Zielpunkt leicht verfehlen, was beim Überladen auf ein Transportfahrzeug zu unerwünschten Erntegutverlusten führt.

Da die Überladeeinrichtung eine nicht unerhebliche Masse und eine gewisse Eigenelastizität aufweist, regen die Nick- bzw. Wankbewegungen der Erntemaschine die Überladeeinrichtung darüber hinaus zu Schwingungen an, die sich leicht auf unkontrollierte Weise aufschaukeln.

Neben den durch Bodenunebenheiten bedingten Maschinenbewegungen bestehen auch andere Ursachen für Schwingungsanregungen der Überladeeinrichtung, beispielsweise Schwingungen, die durch Arbeitsorgane der Erntemaschine (Vorsatzgerät, Einzugsorgane, Häckselaggregat, Nachzerkleinerer, Nachbeschleuniger etc.) oder durch den Erntegutstrahl selbst (Intensitätsschwankungen, Anfahren bzw. Beendigen des Erntegutstrahls) bedingt sind und über den Maschinenrahmen oder direkt auf die Überladeeinrichtung übertragen werden.

Genannte Schwingungen erschweren aus den beschriebenen Gründen den Überladevorgang. Daneben führen die Schwingungen zu einer erheblichen Materialbeanspruchung an der Überladeeinrichtung selbst sowie an zugehörigen Lagerstellen, was deren Lebensdauer verkürzt.

Aus der EP 1 927 277 A1 ist eine selbstfahrende Erntemaschine gemäß dem Oberbegriff des Anspruches 1 bekannt. Darin ist ein passives System zur Dämpfung von Schwingungen einer Überladeeinrichtung beschrieben.

Demzufolge liegt der vorliegenden Erfindung die Aufgabe zugrunde, eine selbstfahrende Erntemaschine anzugeben, mit welcher der Überladevorgang auch bei Verwendung einer verhältnismäßig langen Überladeeinrichtung vereinfacht ist. Daneben wird eine geringere Materialbeanspruchung der Konstruktion angestrebt.

Diese Aufgabe wird entsprechend den kennzeichnenden Merkmalen des Anspruchs 1 gelöst, indem die eingangs beschriebene Erntemaschine durch ein System zur aktiven Dämpfung von Schwingungen der Überladeeinrichtung gekennzeichnet ist, mit einem Sensor, der ausgebildet ist, eine Lageänderung der Überladevorrichtung (14) bezogen auf ein Transportfahrzeug zu erfassen.

Hierzu könnte der Sensor an der Überladeeinrichtung angeordnet sein und beispielsweise per optischer Abstandsmessung relative Lageänderungen gegenüber einem Referenzpunkt bzw. -bereich am Transportfahrzeug erfassen.

Erfindungsgemäß verfügt die Erntemaschine demnach über ein als Regelkreis ausgeführtes System, das die Schwingungen der Überladeeinrichtung aktiv bedämpft. Wie zuvor erwähnt, können die Schwingungen durch Lageänderungen der Erntemaschine (Nick- und/oder Wankbewegungen der Erntemaschine aufgrund von Bodenunebenheiten) oder auch auf sonstige Weise betriebsbedingt verursacht sein. Die vorgesehene Auswert- und Steuereinheit betätigt den Aktor zur Höhenverstellung der Überladeeinrichtung in einer Weise, dass ungewollte Schwingungen der Überladeeinrichtung zumindest verringert werden. Die Überladeeinrichtung kann demnach weitestgehend unabhängig von der Anregung durch störende Schwingungsanregung in einer definierten Lage gehalten werden. Dies erleichtert den Überladevorgang. Daneben wird durch die Schwingungsdämpfung bzw. sogar vollständige Eliminierung die Materialbeanspruchung der Überladeeinrichtung selbst sowie der betroffenen Lagerstellen reduziert.

Zweckmäßigerweise betätigt die Auswert- und Steuereinheit den Aktor in eine der Schwingungsursache entgegengesetzte Richtung.

Die in der Erntemaschine vorgesehene Auswert- und Steuereinheit nimmt die aktive Bedämpfung in Abhängigkeit von einem Sensorsignal vor, das auf unterschiedliche Weise erzeugt sein kann.

Gemäß einer vorteilhaften Weiterbildung der Erfindung handelt es sich bei dem Sensor gemäß Oberbegriff um einen Belastungssensor, der zur Erfassung von Lagerkräften der Überladeeinrichtung gegenüber dem Maschinenrahmen geeignet ist. Da eine plötzliche Lageänderung der Erntemaschine (z.B. Nicken oder Wanken) aufgrund der Trägheit der Überladeeinrichtung Reaktionskräfte an den Lagerstellen der Überladeeinrichtung auslöst, lässt sich mittels eines solchen Belastungssensors leicht eine auf die Überladeeinrichtung einwirkende Schwingungsursache erfassen.

Zur Erfassung einer Veränderung von Lagerkräften kann es sich beispielsweise um einen Kraftmessbolzen handeln, der an einem Lagerpunkt der Überladeeinrichtung angeordnet ist.

In vorteilhafter Weise handelt es sich bei dem Belastungssensor um einen dem Aktor zugeordneter Drucksensor. Eine solche Ausführung bietet sich bei Ausbildung des Aktors als Hydraulik- oder Pneumatikzylinder an, da in diesem Fall wenig konstruktive Änderungen nötig sind.

Ergänzend kann die Erfassung einer auf die Überladeeinrichtung einwirkenden Schwingungsursache durch einen Drehwinkelgeber erfolgen, der beispielsweise einen Schwenkwinkel zwischen Maschinenrahmen und Überladeeinrichtung erfasst. Vorteilhaft kann ein solcher Winkelgeber zusätzlich zu einem Belastungs- bzw. Drucksensor eingesetzt werden.

Ergänzend kann die Erfassung einer Schwingungsursache mittels eines an der Überladeeinrichtung angeordneten

Beschleunigungssensors erfolgen. Die Verwendung eines Beschleunigungssensors bietet insbesondere den Vorteil, dass sich durch die Eigenelastizität der Überladeeinrichtung ergebende Schwingungen erfassen lassen. Zu diesem Zweck ist der Beschleunigungssensor vorteilhaft an einem der Erntemaschine abgewandten Bereich (abgabeseitig) der Überladeeinrichtung angeordnet, da hier die Schwingungsamplituden - und damit die Beschleunigungen - am größten sind.

Ergänzend kann die Erfassung einer Schwingungsursache durch einen Sensor erfolgen, der zur Lagebestimmung der Überladeeinrichtung gegenüber der Umgebung geeignet ist. So könnte der Sensor beispielsweise die Lage der Überladeeinrichtung bezogen auf das Schwer- oder Magnetfeld der Erde oder bezogen auf eine Horizontlinie erfassen. Weiterhin könnte als Sensor ein Kreiselinstrument (Gyroskop) zum Einsatz kommen.

Ergänzend ist denkbar, dass als Sensor ein am Maschinenrahmen der Erntemaschine angeordneter Lagesensor dient. Bei einem solchen Sensor könnte es sich vorteilhaft um einen Beschleunigungssensor oder ein Kreiselinstrument (Gyroskop) handeln, um Bewegungen des Maschinenrahmens, die als Schwingungsursache auf die Überladeeinrichtung einwirken, zu erfassen.

In vorteilhafter Weise ist dem beschriebenen System zur Dämpfung der Schwingungen ein weiterer Regelkreis zur Einstellung der Höhe der Überladeeinrichtung unterlagert. Eine solche Unterlagerung ist zweckmäßig, da neben der erfindungsgemäß vorgesehenen aktiven Schwingungsdämpfung eine gewünschte Höhe der Überladeeinrichtung vom System eingehalten bzw. nach Entfallen der Schwingungsursache wieder erreicht werden soll.

Vorteilhaft steuert die Auswert- und Steuerungseinheit den Aktor in Abhängigkeit von weiteren Betriebskriterien der landwirtschaftlichen Erntemaschine an. Es kann sich hierbei um den Erntegutdurchsatz, die Erntegutart, die Erntegutgeschwindigkeit, die Fahrgeschwindigkeit, den Lenkeinschlag, die Hanglage (Neigung des Bodens), den vertikalen Drehwinkel der Überladeeinrichtung gegenüber dem Maschinenrahmen oder sonstige Betriebsparameter der Erntemaschine handeln.

Die Höhenverstellung der Überladeeinrichtung wird vorteilhaft ermöglicht, indem die Überladeeinrichtung gegenüber dem Maschinenrahmen der Erntemaschine um eine horizontale Achse schwenkbar ist.

Als Aktor zur Betätigung der Höhenverstellung eignet sich insbesondere ein Hydraulikzylinder. Dieser kann zur Verbesserung des beidseitigen Ansprechverhaltens doppelt wirkend ausgeführt sein. Alternativ kann auch ein pneumatischer oder elektrischer Aktor zum Einsatz kommen.

In vorteilhafter Ausgestaltung berücksichtigt die Auswert- und Steuereinheit bei der Betätigung des Aktors die Höhenstellung der Überladeeinrichtung. Durch diese Maßnahme können beispielsweise Kollisionen zwischen der Überladeeinrichtung und dem Maschinenrahmen oder das sonstige Anschlagen an eine Endstellung vermieden werden. Die Auswert- und Steuereinheit erhält dazu mittels eines Höhensensors (beispielsweise ein zuvor erwähnter Drehwinkelgeber) die Höhenstellung der Überladeeinrichtung.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung.
Es zeigen:
- Fig. 1: einen Feldhäcksler mit nach hinten geschwenkter Überladeeinrichtung in schematischer Seitenansicht,
- Fig. 2: eine Überladeeinrichtung eines erfindungsgemäßen Feldhäckslers in schematischer Seitenansicht.

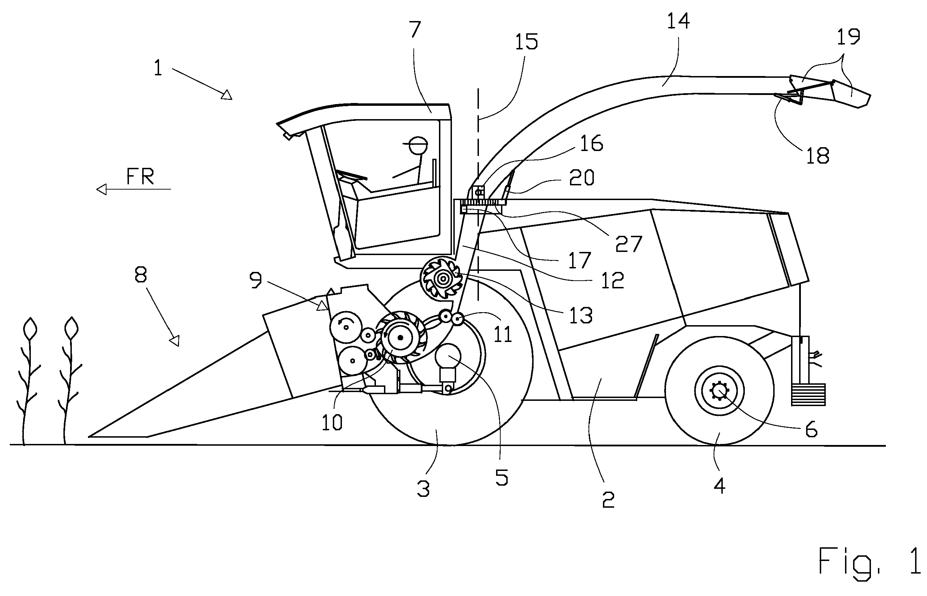

Fig. 1 zeigt eine als Feldhäcksler 1 ausgeführte selbstfahrende landwirtschaftliche Erntemaschine in schematischer Seitenansicht mit teilweiser Schnittdarstellung. Der Feldhäcksler 1 ist auf einen Maschinenrahmen 2 aufgebaut, der von angetriebenen vorderen Rädern 3 einer Vorderachse 5 und lenkbaren hinteren Rädern 4 einer Hinterachse 6 getragen wird. Die Bedienung des Feldhäckslers 1 erfolgt von einer oberhalb der Vorderachse 5 angeordneten Fahrerkabine 7.

Frontseitig, in Fahrtrichtung FR gesehen, ist dem Feldhäcksler 1 ein Erntevorsatzgerät 8 zugeordnet, beispielsweise ein Maisgebiss, welches im Arbeitsbetrieb Erntegut aufnimmt, ggf. zerkleinert und dem nachfolgenden Einzugsorgan 9 (umfassend Einzugs- und Vorpresswalzen) zuführt. Das Einzugsorgan 9 leitet das Erntegut einer nachgeordneten, rotierenden Häckseltrommel 10 zu, deren umlaufende Häckselmesser das Erntegut in Zusammenwirkung mit einer Gegenschneide zerkleinern. Das zerkleinerte Erntegut wird sodann an einen Nachzerkleinerer 11 (auch Korncracker genannt) gefördert, der Erntegutkörner, beispielsweise Mais, anschlägt und über einen Förderschacht 12 an einen Nachbeschleuniger 13 übergibt. Der Nachbeschleuniger 13 beschleunigt das zerkleinerte Erntegut wirft es über eine als Auswurfkrümmer 14 ausgeführte Überladeeinrichtung auf ein hier nicht dargestelltes Transportfahrzeug.

Der Auswurfkrümmer 14 ist um eine vertikale Achse 15 schwenkbar. Der Antrieb erfolgt mittels eines am Fuß des Auswurfkrümmers 14 angeordneten Drehkranzes 27, in den ein nicht gezeigter Schneckentrieb eingreift. Die Schwenkbarkeit ermöglicht ein wahlweise seitliches Überladen auf ein neben dem Feldhäcksler 1 fahrendes Transportfahrzeug oder ein Überladen auf ein hinter dem Feldhäcksler 1 fahrendes Transportfahrzeug.

Zur Veränderung der Höhenstellung ist der Auswurfkrümmer 14 daneben um eine horizontale Achse 16 verschwenkbar. Mittels eines Hydraulikzylinders 20, der zwischen einem Befestigungssockel 17 und einem Lagerpunkt des Auswurfkrümmers 14 angeordnet ist, lässt sich die Höhenverstellung durchführen.

Am auswurfseitigen Ende des Auswurfkrümmers 14 befindet sich eine über einen weiteren Hydraulikzylinder 18 verstellbare mehrteilige Auswurfklappe 19. Durch Verstellung der Auswurfklappe 19 kann die Wurfweite, d.h. der Abstand zwischen dem Feldhäcksler 1 und einem Auftreffpunkt des Gutstroms auf das Transportfahrzeug, beeinflusst werden. Wird die Auswurfklappe 19 nach unten geschwenkt, so ist die Wurfweite bei gleichbleibender Höheneinstellung des Auswurfkrümmers 14 geringer als bei einer nach oben geschwenkten Auswurfklappe 19.

Beim Überladen von Erntegut vom Feldhäcksler 1 auf ein mitfahrendes Transportfahrzeug bewegt sich der Feldhäcksler 1 in Fahrtrichtung FR vorwärts über das Feld. Je nach Art des Überladens ist der Auswurfkrümmer 14 bezogen auf die vertikale Achse 15 derart ausgerichtet, dass dieser etwa quer zur Fahrtrichtung FR (seitliches Überladen) oder - wie in Fig. 1 dargestellt - nach hinten (Überladen auf ein hinter dem Feldhäcksler fahrendes Transportfahrzeug) weist.

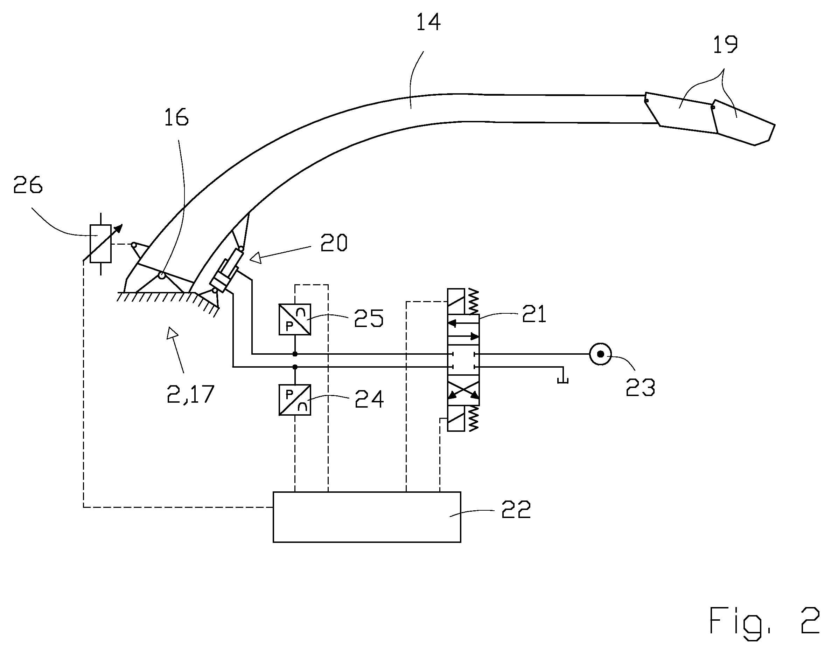

Zum Ausgleich von Schwingungen, zu denen der Auswurfkrümmer 14 im Betrieb des Feldhäckslers 1 aus verschiedenen Gründen angeregt wird, weist der Feldhäcksler 1 ein nachfolgend mit Bezug auf Fig. 2 näher zu erläuterndes System zur aktiven Schwingungsdämpfung gemäß einzigem Ausführungsbeispiel auf.

Fig. 2 zeigt schematisch eine als Auswurfkrümmer 14 ausgeführte Überladeeinrichtung 14, die um eine horizontale Schwenkachse 16 schwenkbar gegenüber dem Maschinenrahmen 2 einer selbstfahrenden landwirtschaftlichen Erntemaschine gelagert ist. Es kann sich dabei beispielsweise um einen Feldhäcksler 1, wie in Fig. 1 dargestellt, handeln. In diesem Fall wäre der Auswurfkrümmer 14 mittels eines um eine vertikale Achse 15 (vgl. Fig. 1) drehbaren Befestigungssockels 17 gegenüber dem Maschinenrahmen 2 gelagert.

Zur Betätigung der Höhenverstellung des Auswurfkrümmers 14 dient gemäß Fig. 2 ein doppelt wirkender Hydraulikzylinder 20 mit einer oberen und einer unteren Kammer. Die Kammern werden über zwei nicht näher bezeichnete separate Hydraulikleitungen von einer Druckversorgung 23 mit Hydrauliköl versorgt. Durch Schalten eines doppelten Ventils 21 lassen sich die Kammern des Hydraulikzylinders 20 unabhängig voneinander gezielt mit Hydraulikdrücken beaufschlagen, um den Auswurfkrümmer 14 auf bzw. ab zubewegen.

So bewirkt eine Druckdifferenz der unteren Kammer gegenüber der oberen Kammer, welche die zur Kompensation der Gewichtskraft des auf dem Zylinder 20 lastenden Auswurfkrümmers 14 nötige Druckdifferenz übersteigt, ein Anheben des Auswurfkrümmers 14.

Ein Absenken des Auswurfkrümmers 14 kann schon durch Unterschreiten dieser zum "Halten des Auswurfkrümmers 14" nötigen Druckdifferenz erreicht werden. Zur Beschleunigung des Absenkvorgangs kann die obere Kammer noch mit Druck, insbesondere einem Überdruck gegenüber der unteren Kammer, beaufschlagt werden.

Das System zur aktiven Schwingungsdämpfung gemäß dargestelltem Ausführungsbeispiel sieht vor, dass jede der Druckleitungen zur Versorgung des Hydraulikzylinders 20 mit einem Drucksensor 24, 25 versehen ist. Ein Steuergerät 22 erhält über gestrichelt gezeichnete Signalleitungen laufend Informationen über den Druckzustand in den Versorgungsleitungen der Kammern des Hydraulikzylinders 20. Das Steuergerät 22 kann wiederum über (ebenfalls gestrichelt gezeichnete) Signalleitungen das Ventil 21 ansteuern und so den Druck in den Versorgungsleitungen des Hydraulikzylinders 20 beeinflussen.

Eine selbstfahrende Erntemaschine, wie ein Feldhäcksler 1 gemäß Fig. 1, kann während des Erntebetriebs seinen Auswurfkrümmer 14 zu störenden Schwingungen (wie eingangs beschrieben) anregen. Dies geschieht beispielsweise aufgrund von Bewegungen des Maschinenrahmens 2 beim Durchfahren bzw. Überqueren von Bodenunebenheiten. Andere Schwingungsursachen sind denkbar, beispielsweise veranlasst durch Arbeitsaggregate oder durch Intensitätsschwankungen des Erntegutstroms selbst. Insbesondere die durch Bodenunebenheiten verursachten Bewegungen des Maschinenrahmens 2 (Nicken bzw. Wanken) äußern sich in auf- und abwärts gerichteten Schwingungen des Auswurfkrümmers 14.

Aufgrund wechselseitiger Reaktionskräfte führen die Schwingungen des Überladekrümmers 14 zu schwankenden Lagerkräften an den Lagerstellen des Überladekrümmers 14, somit auch am Hydraulikzylinder 20. Die Drucksensoren 24, 25 erfassen die dadurch bedingten Druckschwankungen der Zuleitungen des Hydraulikzylinders 20, so dass das Steuergerät 22 ein Signal an das Ventil 21 geben kann, um den Hydraulikzylinder 20 derart zu betätigen, dass die Schwingungen des Überladekrümmers 14 gedämpft werden. Im Idealfall ist das vom Steuergerät 22 abgegebene Signal an den Aktor (umfassend Ventil 21 und Hydraulikzylinder 20) zeitlich und intensitätsmäßig derart abgestimmt, dass Schwingungen des Überladekrümmers 14 praktisch eliminiert werden.

Aufgrund eine solchen aktiven Bedämpfung wird der Überladevorgang deutlich vereinfacht und die Materialbeanspruchung des Überladekrümmers 14 deutlich reduziert.

Es sei darauf hingewiesen, dass die vorteilhafte Wirkung einer aktiven Dämpfung selbstverständlich auch bei Ausführung des Hydraulikzylinders 20 als einfach wirkendem Zylinder erzielbar ist. Daneben lässt sich der Effekt auch mittels anderer als hydraulischer Aktoren erreichen.

Weiterhin können als Sensoren auch andere Sensoren als Drucksensoren zum Einsatz kommen, die zur Erfassung von Schwingungsursachen geeignet sind.

Gemäß Darstellung in Fig. 2 enthält das System zur Schwingungsdämpfung auch einen Drehwinkelgeber 26. Dieser kann alternativ oder ergänzend zu den Drucksensoren 24, 25 zum Einsatz kommen. Der Drehwinkelgeber 26 erfasst den Schwenkwinkel zwischen Maschinenrahmen 2 (bzw. Befestigungssockel 17) und Überladekrümmer 14 und leitet diesen an das Steuergerät 22 weiter. Dementsprechend kann das Steuergerät 22 die zur Bedämpfung geeignete Maßnahme zusätzlich (oder alternativ) aus dem Schwenkwinkel ableiten. Andere Sensoren zur Erfassung von Schwingungsursachen sind denkbar, beispielsweise ein am Auswurfkrümmer 14 angeordneter (in Fig. 2 nicht dargestellter) Beschleunigungssensor.

Zweckmäßigerweise ist dem System zur Schwingungsdämpfung ein Regelkreis zur Einstellung der Höhe des Überladekrümmers 14 unterlagert. Demnach kann der Bediener der Erntemaschine eine gewünschte Höhe des Überladekrümmers 14 einstellen, die nach Bedämpfung von Schwingungen vom Steuergerät 22 wieder angesteuert wird.

**Bezugszeichenliste**

| | | | |
|---|---|---|---|
| 1 | Feldhäcksler | 23 | Druckversorgung |
| 2 | Maschinenrahmen | 24 | Drucksensor |
| 3 | vordere Räder | 25 | Drucksensor |
| 4 | hintere Räder | 26 | Drehwinkelgeber |
| 5 | Vorderachse | 27 | Drehkranz |
| 6 | Hinterachse | FR | Fahrtrichtung |
| 7 | Fahrerkabine | | |
| 8 | Erntegutvorsatzgerät | | |
| 9 | Einzugsorgan | | |
| 10 | Häckseltrommel | | |
| 11 | Nachzerkleinerer | | |
| 12 | Förderschacht | | |
| 13 | Nachbeschleuniger | | |
| 14 | Auswurfkrümmer | | |
| 15 | vertikale Achse | | |
| 16 | horizontale Achse | | |
| 17 | Befestigungssockel | | |
| 18 | Hydraulikzylinder | | |
| 19 | Auswurfklappe | | |
| 20 | Hydraulikzylinder | | |
| 21 | Ventil | | |
| 22 | Steuergerät | | |

## Patentansprüche

1. Selbstfahrende landwirtschaftliche Erntemaschine (1), insbesondere Feldhäcksler, mit einer gegenüber einem Maschinenrahmen (2) der Erntemaschine (1) gelagerten Überladeeinrichtung (14), die sich mittels eines Aktors (20) in deren Höhe verstellen lässt, umfassend zumindest einen Sensor (24, 25, 26) zur Erfassung einer auf die Überladeeinrichtung (14) einwirkenden Schwingungsursache sowie eine Auswert- und Steuereinheit (22), welche den Aktor (20) abhängig von der erfassten Schwingungsursache betätigt, um Schwingungen der Überladeeinrichtung (14) zu dämpfen,
**gekennzeichnet durch** ein System zur aktiven Dämpfung von Schwingungen der Überladeeinrichtung (14) mit einem Sensor, der ausgebildet ist, eine Lageänderung der Überladevorrichtung (14) bezogen auf ein Transportfahrzeug zu erfassen.

2. Erntemaschine nach Anspruch 1, **dadurch gekennzeichnet, dass** die Auswert- und Steuereinheit (22) den Aktor (20) in eine der Schwingungsursache entgegengesetzte Richtung betätigt.

3. Erntemaschine nach Anspruch 1 oder 2, **dadurch gekennzeichnet, dass** als Sensor (24, 25) zumindest ein Belastungssensor dient, der zur Erfassung von Lagerkräften der Überladeeinrichtung (14) gegenüber dem Maschinenrahmen (2) geeignet ist.

4. Erntemaschine nach Anspruch 3, **dadurch gekennzeichnet, dass** als Sensor (24, 25) zumindest ein dem Aktor zugeordneter Drucksensor dient.

5. Erntemaschine nach einem der Ansprüche 1 bis 4, **dadurch gekennzeichnet, dass** als ergänzender Sensor (26) ein Drehwinkelgeber dient, der einen Schwenkwinkel zwischen Maschinenrahmen (2) und Überladeeinrichtung (14) erfasst.

6. Erntemaschine nach einem der Ansprüche 1 bis 5, **dadurch gekennzeichnet, dass** als ergänzender Sensor ein an der Überladeeinrichtung (14) angeordneter Beschleunigungssensor dient.

7. Erntemaschine nach einem der Ansprüche 1 bis 6, **dadurch gekennzeichnet, dass** ein ergänzender Sensor zur Lagebestimmung der Überladeeinrichtung (14) gegenüber der Umgebung geeignet ist.

8. Erntemaschine nach einem der Ansprüche 1 bis 7, **dadurch gekennzeichnet, dass** als ergänzender Sensor ein am Maschinenrahmen (2) der Erntemaschine (1) angeordneter Lagesensor dient.

9. Erntemaschine nach einem der Ansprüche 1 bis 8, **dadurch gekennzeichnet, dass** dem System zur Dämpfung der Schwingungen ein Regelkreis zur Einstellung der Höhe der Überladeeinrichtung (14) unterlagert ist.

10. Erntemaschine nach einem der Ansprüche 1 bis 9, **dadurch gekennzeichnet, dass** die Auswert- und Steuerungseinheit (22) den Aktor (20) in Abhängigkeit von weiteren Betriebskriterien der landwirtschaftlichen Erntemaschine (1) ansteuert.

11. Erntemaschine nach einem der Ansprüche 1 bis 10, **dadurch gekennzeichnet, dass** die Überladeeinrichtung (14) zu deren Höhenverstellung gegenüber dem Maschinenrahmen (2) um eine horizontale Achse (16) schwenkbar ist.

12. Erntemaschine nach einem der Ansprüche 1 bis 11, **dadurch gekennzeichnet, dass** es sich bei dem Aktor (20) um einen Hydraulikzylinder handelt.

## Claims

1. A self-propelled agricultural harvester (1), in particular a forage harvester, comprising a transloading device (14) which is mounted with respect to a machine frame (2) of the harvester (1) and which can be adjusted in its height by means of an actuator (20), including at least one sensor (24, 25, 26) for detecting a cause of oscillations acting on the transloading device (14) and an evaluation and control unit (22) which actuates the actuator (20) in dependence on the detected cause of oscillations to damp oscillations of the transloading device (14),
**characterised by** a system for actively damping oscillations of the transloading device (14) with a sensor which is adapted to detect a change in position of the transloading device (14) with respect to a transport vehicle.

2. A harvester according to claim 1 **characterised in that** the evaluation and control unit (22) actuates the actuator (20) in a direction opposite to the cause of the oscillations.

3. A harvester according to claim 1 or claim 2 **characterised in that** serving as the sensor (24, 25) is at least one loading sensor suitable for detecting mounting forces of the transloading device (14) relative to the machine frame (2).

4. A harvester according to claim 3 **characterised in that** at least one pressure sensor associated with the actuator serves as the sensor (24, 25).

5. A harvester according to one of claims 1 to 4 **characterised in that** serving as a supplemental sensor (26) is a rotary angle encoder which detects a pivotal angle between machine frame (2) and transloading device (14).

6. A harvester according to one of claims 1 to 5 **characterised in that** an acceleration sensor arranged on the transloading device (14) serves as a supplemental sensor.

7. A harvester according to one of claims 1 to 6 **characterised in that** a supplemental sensor is suitable for determining the position of the transloading device (14) relative to the environment.

8. A harvester according to one of claims 1 to 7 **characterised in that** a position sensor arranged on the machine frame (2) of the harvester (1) serves as a supplemental sensor.

9. A harvester according to one of claims 1 to 8 **characterised in that** a regulating circuit for adjusting the height of the transloading device (14) underlies the system for damping the oscillations.

10. A harvester according to one of claims 1 to 9 **characterised in that** the evaluation and control unit (22) controls the actuator (20) in dependence on further operating criteria of the agricultural harvester (1).

11. A harvester according to one of claims 1 to 10 **characterised in that** the transloading device (14) is pivotable about a horizontal axis (16) for height adjustment thereof relative the machine frame (2).

12. A harvester according to one of claims 1 to 11 **characterised in that** the actuator (20) is a hydraulic cylinder.

## Revendications

1. Machine agricole de récolte automotrice (1), en particulier ensileuse, avec un dispositif de transfert (14) qui est monté à l'aide de paliers par rapport à un bâti de machine (2) de la machine de récolte (1) et qui est réglable en hauteur au moyen d'un actionneur (20), comprenant au moins un capteur (24, 25, 26) pour détecter une cause de vibrations agissant sur le dispositif de transfert (14) ainsi qu'une unité d'analyse et de commande (22) qui actionne l'actionneur (20) en fonction de la cause de vibrations détectée afin d'amortir les vibrations du dispositif de transfert (14), **caractérisée par** un système d'amortissement actif de vibrations du dispositif de transfert (14) comprenant un capteur qui est conçu pour détecter un changement de position du dispositif de transfert (14) par rapport à un véhicule de transport.

2. Machine de récolte selon la revendication 1, **caractérisée en ce que** l'unité d'analyse et de commande (22) actionne l'actionneur (20) dans une direction opposée à la cause de vibrations.

3. Machine de récolte selon la revendication 1 ou 2, **caractérisée en ce que** le capteur (24, 25) utilisé est au moins un capteur de charge qui est apte à détecter des forces exercées sur les paliers du dispositif de transfert (14) par rapport au bâti de machine (2).

4. Machine de récolte selon la revendication 3, **caractérisée en ce que** le capteur (24, 25) utilisé est au moins un capteur de pression associé à l'actionneur.

5. Machine de récolte selon une des revendications 1 à 4, **caractérisée en ce qu'**un indicateur de position angulaire détectant l'angle de pivotement entre le bâti de machine (2) et le dispositif de transfert (14) sert de capteur supplémentaire (26).

6. Machine de récolte selon une des revendications 1 à 5, **caractérisée en ce qu'**un capteur d'accélération disposé sur le dispositif de transfert (14) sert de capteur supplémentaire.

7. Machine de récolte selon une des revendications 1 à 6, **caractérisée en ce qu'**un capteur supplémentaire est apte à déterminer la position du dispositif de transfert (14) par rapport à l'environnement.

8. Machine de récolte selon une des revendications 1 à 7, **caractérisée en ce qu'**un capteur de positionnement disposé sur le bâti de machine (2) de la machine de récolte (1) sert de capteur supplémentaire.

9. Machine de récolte selon une des revendications 1 à 8, **caractérisée en ce qu'**un circuit de régulation destiné à régler la hauteur du dispositif de transfert (14) est subordonné au système d'amortissement des vibrations.

10. Machine de récolte selon une des revendications 1 à 9, **caractérisée en ce que** l'unité d'analyse et de commande (22) commande l'actionneur (20) en fonction d'autres critères d'exploitation de la machine agricole de récolte (1).

11. Machine de récolte selon une des revendications 1 à 10, **caractérisée en ce que** le dispositif de transfert (14) peut pivoter autour d'un axe horizontal (16) pour être réglé en hauteur par rapport au bâti de machine (2).

12. Machine de récolte selon une des revendications 1 à 11, **caractérisée en ce que** l'actionneur (20) est un vérin hydraulique.
